# EUROPEAN PATENT APPLICATION

(11) **EP 3 225 466 A1**
(43) Date of publication of application: **04.10.2017**
(21) Application number: 15864243.9
(22) Date of filing: 12.11.2015
(51) Int. Cl.: B60R 1/072, B60R 1/06

(54) **VIEWING CONTROL DEVICE FOR VEHICLE**

(30) Priority: 25.11.2014 JP 2014237592
(71) Applicant: Kabushiki Kaisha Tokai-Rika-Denki-Seisakusho, Niwa-gun, Aichi-ken 480-0195 (JP)
(72) Inventor: MIYAZAKI, Shinichi, Niwa-gun Aichi 480-0195 (JP); NAGAO, Takashi, Niwa-gun Aichi 480-0195 (JP); KOBAYASHI, Fumikazu, Niwa-gun Aichi 480-0195 (JP); KONDO, Juntaro, Niwa-gun Aichi 480-0195 (JP)
(74) Representative: TBK
(86) International application number: PCT/JP2015/081878
(87) International publication number: WO 2016/084617

(57) **Abstract**

A viewing control device for a vehicle has: an in/out motor (22) that changes a viewing range of a periphery of a vehicle with respect to a vehicle occupant due to driving electric power, which is greater than or equal to a preset electric power, being applied to the in/out motor (22); and an ECU (12) that, in a case of establishment of a predetermined condition that is before establishment of a preset change condition under which the viewing range is changed, applies a preset initial electric power to the in/out motor (22) via a mirror surface driving driver (20).

## Description

### Technical Field

The present invention relates to a viewing control device for a vehicle that controls a viewing device for viewing the periphery of a vehicle, such as a door mirror or a camera or the like.

### Background Art

Japanese Utility Model Application Laid-Open (JP-U) No. H6-23829 proposes a back mirror device for a vehicle that has a mirror driving mechanism that obtains a turn direction signal from a direction indicator or a steering wheel, and moves a rearview mirror in respective directions.

Further, Japanese Patent Application Laid-Open (JP-A) No. 2010-208374 proposes an angle control device of a door mirror for a vehicle that has accelerating sensing means for sensing that a vehicle is accelerating at greater than or equal to a given acceleration from a given speed and within a given time period, steering angle range sensing means for sensing that the steering angle of the steering of the vehicle is within a given range within a given time period, and blinker operation sensing means for sensing that the right turn blinker of the vehicle has operated within a given time period, and in which, in a case in which it is sensed by these sensing means that the vehicle is accelerating at greater than or equal to a given acceleration from a given speed and within a given time period, and that the steering angle of the steering of the vehicle is within a given range within a given time period, and that the right turn blinker of the vehicle has operated within a given time period, effects control so as to open up, toward the outer side, the angle of the right side door mirror of the vehicle from a predetermined angle for a given time period and by a given angle.

### SUMMARY OF INVENTION

### Technical Problem

However, JP-U No. H6-23829 and JP-A No. 2010-208374 describe changing the viewing range of the door mirror device for a vehicle in a case in which plural conditions are established, but time is required from the instructing of the start of the change in the viewing range until the changing of the viewing range actually starts. For example, due to circuits that have poor responsiveness (e.g., a P-MOS or a charge pump or the like) or play in mechanical mechanisms or the like, time is required until the changing of the viewing range actually starts, and therefore, this is a cause of poor responsiveness.

The present invention was made in view of the above-described circumstances, and an object thereof is to improve the responsiveness in a case of changing a viewing range. Solution to Problem

In order to achieve the above-described object, the present invention comprises: a changing portion that changes a viewing range of a periphery of a vehicle with respect to a vehicle occupant due to driving electric power, which is greater than or equal to a preset electric power, being applied to the changing portion; and an applying portion that applies a preset initial electric power that is lower than the driving electric power to the changing portion in a case of establishment of a predetermined condition that is before establishment of a preset change condition under which the viewing range is to be changed.

In accordance with the first aspect of the present invention, at the changing portion, the viewing range of the periphery of the vehicle with respect to the vehicle occupant is changed due to driving electric power, which is greater than or equal to a preset electric power, being applied to the changing portion. For example, in a case in which the periphery of the vehicle is viewed by a mirror surface or a camera, the position of the mirror surface or the imaging direction, and the viewing range, are changed by applying driving electric power to an actuator such as a motor or the like.

Further, at the applying portion, in a case of establishment of a predetermined condition that is before establishment of a preset change condition under which the viewing range is changed, a preset initial electric power that is lower than the driving electric power is applied to the changing portion. For example, the initial electric power that is lower than the driving electric power is applied to the changing portion in a case of establishment of one or some conditions among plural conditions under which the viewing range is changed by the changing portion and which serve as the predetermined condition. Namely, due to the initial electric power being applied to the changing portion beforehand, circuits that have poor responsiveness can be driven in advance, and mechanical play can be eliminated. Therefore, the responsiveness in a case of changing the viewing range can be improved.

Note that electric power for operation by an amount corresponding to an amount of mechanical play of the changing portion without starting changing of the viewing range by the changing portion, can be utilized as the initial electric power.

Further, in a case in which the change condition is established after application of the initial electric power, the applying portion may further apply electric power to the changing portion so as to change the viewing range interlockingly with turning of a vehicle. In this case, in a case in which turning-on of a turn switch serves as the predetermined condition, the applying portion may apply the initial electric power to the changing portion, and, in a case in which, in a state in which the turn switch has been turned on as the change condition, a steering angle that is greater than or equal to a predetermined steering angle is detected by a detecting portion that detects a steering angle, the applying portion may apply electric power to the changing portion so as to change the viewing range interlockingly with the turning.

Moreover, the changing portion may change a mirror surface position of a door mirror device for a vehicle, or may change an imaging direction of an imaging device that images the periphery of the vehicle.

### Advantageous Effects of Invention

As described above, in accordance with the present invention, there is the effect that the responsiveness in a case of changing a viewing range can be improved.

### BRIEF DESCRIPTION OF DRAWINGS

Fig. 1 is an exterior view of a door mirror device for a vehicle that is the object of control of a door mirror control device relating to an embodiment of the present invention.
Fig. 2 is a cross-sectional view (a cross-sectional view along line 2-2 of Fig. 1) in which main portions of the door mirror device for a vehicle are seen from a vehicle vertical direction upper side (a vehicle upper side).
Fig. 3 is a block drawing showing the structure of the control system of the door mirror control device for a vehicle relating to the present embodiment.
Fig. 4 is a drawing for explaining turning-interlocked mirror control.
Fig. 5 is a flowchart that shows an example of the flow of processings that are carried out at an ECU of the door mirror control device for a vehicle relating to the present embodiment.
Fig. 6 is a drawing for explaining an operation example at the time of a left turn, of the door mirror control device for a vehicle relating to the present embodiment.
Fig. 7A is a drawing showing current fluctuations of an in/out motor at the door mirror control device for a vehicle relating to the present embodiment.
Fig. 7B is a drawing showing current fluctuations of the in/out motor in a case in which initial electric power is not applied, at the door mirror control device for a vehicle relating to the present embodiment.

### DESCRIPTION OF EMBODIMENTS

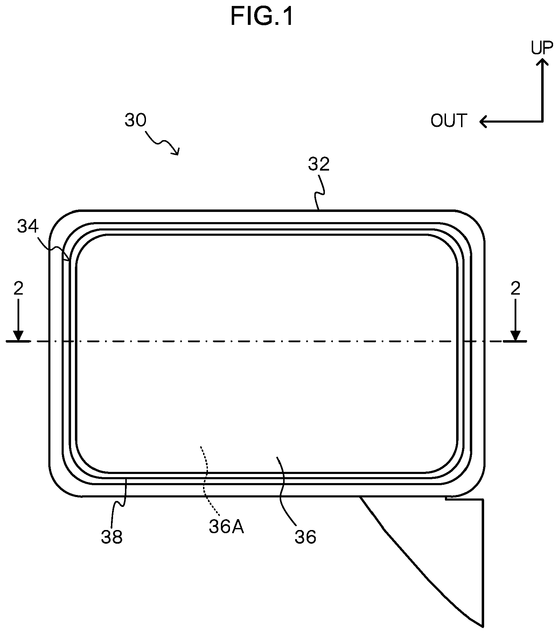

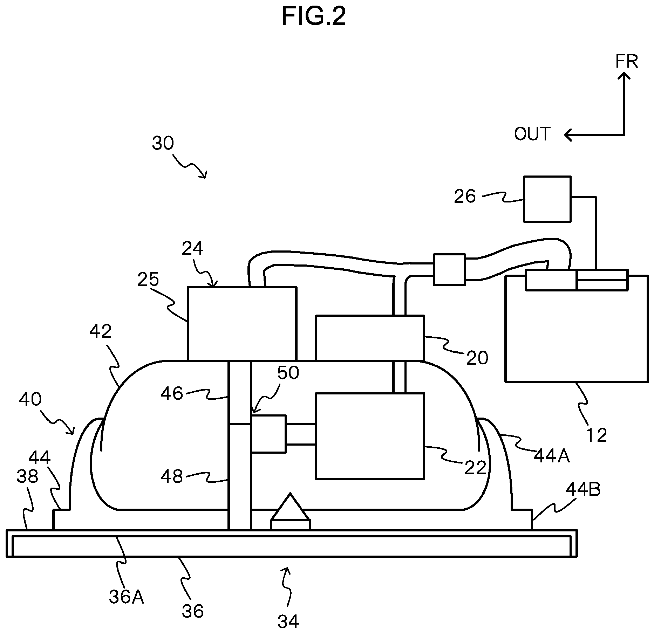

An example of an embodiment of the present invention is described in detail hereinafter with reference to the drawings. Note that, hereinafter, a door mirror control device for a vehicle is described as an example of the viewing control device for a vehicle of the present invention. Fig. 1 is an exterior view of a door mirror device for a vehicle that is the object of control of the door mirror control device relating to the embodiment of the present invention. Further, Fig. 2 is a cross-sectional view (a cross-sectional view along line 2-2 of Fig. 1) in which main portions of the door mirror device for a vehicle are seen from the vehicle vertical direction upper side (the vehicle upper side). Note that, in the drawings, the vehicle front side is indicated by arrow FR, a vehicle transverse direction outer side (the vehicle right side) is indicated by arrow OUT, and the upper side is indicated by arrow UP.

A door mirror device 30 for a vehicle is installed at the outer side of the front end of a vertical direction intermediate portion of a door (a front door) of the vehicle.

As shown in Fig. 1, the door mirror device 30 for a vehicle has a visor 32 that is substantially shaped as a rectangular parallelepiped container and serves as an outer peripheral member. The door mirror device 30 for a vehicle is installed at the door due to the vehicle transverse direction inner side portion of the visor 32 being supported at the door (the vehicle body side). Further, the interior of the visor 32 opens toward the vehicle rear side.

A mirror 34 that is substantially shaped as a rectangular flat plate is provided within the visor 32. The mirror 34 is disposed in the opening portion of the visor 32. A mirror main body 36 (mirror body) is provided at the vehicle rear side portion of the mirror 34. The vehicle rear side surface that is a reflecting film of the mirror main body 36 is made to be a mirror surface 36A. Further, the vehicle front side and the outer periphery of the mirror main body 36 are covered by a mirror holder 38 (a mirror holder outer).

As shown in Fig. 2, a mirror surface adjusting unit 40 that is electrically operated is provided within the visor 32.

A case 42 that is substantially shaped as a hemispherical container is provided at the vehicle front side portion of the mirror surface adjusting unit 40. The interior of the case 42 opens toward the vehicle rear side. The case 42 is supported by the visor 32, and, due thereto, the mirror surface adjusting unit 40 is supported by the visor 32.

A tilting body 44 (mirror holder inner) is provided at the vehicle rear side portion of the mirror surface adjusting unit 40. The tilting body 44 is held by the case 42 so as to be able to tilt (swing, pivot). A sliding tube 44A that is substantially shaped as a cylindrical tube is provided at the tilting body 44. The diameter of the sliding tube 44A becomes gradually smaller toward the vehicle front side, and the sliding tube 44A is made to be able to slide with respect to the peripheral wall of the case 42. A mounting plate 44B that is substantially disc shaped is provided integrally with the vehicle rear side end of the sliding tube 44A. The mirror holder 38 of the mirror 34 is detachably mounted to the vehicle rear side of the mounting plate 44B. Due thereto, the mirror 34 can be tilted integrally with the tilting body 44 and with respect to the case 42, with the center of gravity position of the mirror 34 (the surface central position of the mirror surface 36A) being the center of the tilting.

An up/down motor (not illustrated) and an in/out motor 22 that serves as a changing portion are fixed to the interior of the case 42. An up/down rod (not illustrated) and an in/out rod 48 that are respectively rod-shaped are connected to the up/down motor and the in/out motor 22 via gear mechanisms 50 that serve as mechanical mechanisms. The up/down rod and the in/out rod 48 are held within the case 42 so as to be able to slide (move) in the vehicle longitudinal direction (the axial direction). The distal end (the vehicle rear side end) of the up/down rod is rotatably held at the mounting plate 44B at the upper side (or may be at the lower side) of the center of gravity position of the mirror 34. The distal end (the vehicle rear side end) of the in/out rod 48 is rotatably held at the mounting plate 44B at the vehicle transverse direction outer side (or may be at the vehicle transverse direction inner side) of the center of gravity position of the mirror 34.

The up/down motor and the in/out motor 22 are electrically connected via mirror surface driving drivers 20 to an ECU 12 (a mirror ECU) that serves as an applying portion. The ECU 12 is provided within the visor 32 or at the vehicle body side. An adjustment operation device 26 is electrically connected to the ECU 12. When the adjustment operation device 26 is operated by a vehicle occupant (the driver in particular) of the vehicle, due to control of the ECU 12, the mirror surface adjusting unit 40 is operated, and the up/down motor and the in/out motor 22 are driven. Due thereto, the up/down rod and the in/out rod 48 are slid in the vehicle longitudinal direction, and the tilting body 44 and the mirror 34 are tilted with respect to the case 42. Due thereto, the tilting position of the mirror 34 is adjusted, and the angle of the mirror surface 36A of the mirror 34 (the direction in which the mirror surface 36A faces) is adjusted.

When the up/down rod is slid toward the vehicle front side, the tilting body 44 and the mirror 34 are tilted upward (in an upwardly-facing direction), and the mirror surface 36A of the mirror 34 is tilted in an upwardly-facing direction. When the up/down rod is slid toward the vehicle rear side, the tilting body 44 and the mirror 34 are tilted downward (in a downwardly-facing direction), and the mirror surface 36A of the mirror 34 is tilted in a downwardly-facing direction. When the in/out rod 48 is slid toward the vehicle front side, the tilting body 44 and the mirror 34 are tilted outward (in an outwardly-facing direction), and the mirror surface 36A of the mirror 34 is tilted in a direction of facing outwardly in the vehicle transverse direction. When the in/out rod 48 is slid toward the vehicle rear side, the tilting body 44 and the mirror 34 are tilted inward (in an inwardly-facing direction), and the mirror surface 36A of the mirror 34 is tilted in a direction of facing inwardly in the vehicle transverse direction.

As shown in Fig. 2, an up/down sensor (not illustrated) and an in/out sensor 24 are provided at the case 42. The up/down sensor and the in/out sensor 24 respectively are electrically connected to the ECU 12. A housing 25 that is substantially shaped as a rectangular parallelepiped box is provided at the up/down sensor and the in/out sensor 24, respectively. The up/down sensor and the in/out sensor 24 are fixed to the case 42 due to housings 25 being fixed to the outer side of the bottom wall of the case 42.

Detecting rods 46 that are rod-shaped are provided at the housings 25 so as to be slidable in the vehicle longitudinal direction (the axial direction). The detecting rods 46 project-out toward the vehicle rear side from the housings 25 and are urged toward the vehicle rear side. The detecting rods 46 pass-through the bottom wall of the case 42, and are inserted into the interior of the case 42. The detecting rods 46 of the up/down sensor and the in/out sensor 24 are disposed coaxially with and at the vehicle front sides of the up/down rod and the in/out rod 48, respectively. The distal ends (the vehicle rear side ends) of the detecting rods 46 of the up/down sensor and the in/out sensor 24 are, by urging forces, made to contact the proximal ends (the vehicle front side ends) of the up/down rod and the in/out rod 48 respectively. The detecting rods 46 of the up/down sensor and the in/out sensor 24 usually can slide in the vehicle longitudinal direction integrally with the up/down rod and the in/out rod 48, respectively. Therefore, due to the up/down sensor and the in/out sensor 24 detecting the slid positions in the vehicle longitudinal direction of the detecting rods 46 respectively, the up/down sensor and the in/out sensor 24 detect the slid positions in the vehicle longitudinal direction of the up/down rod and the in/out rod 48 respectively, and detect the tilted position of the mirror 34 in the up/down direction and the in/out direction.

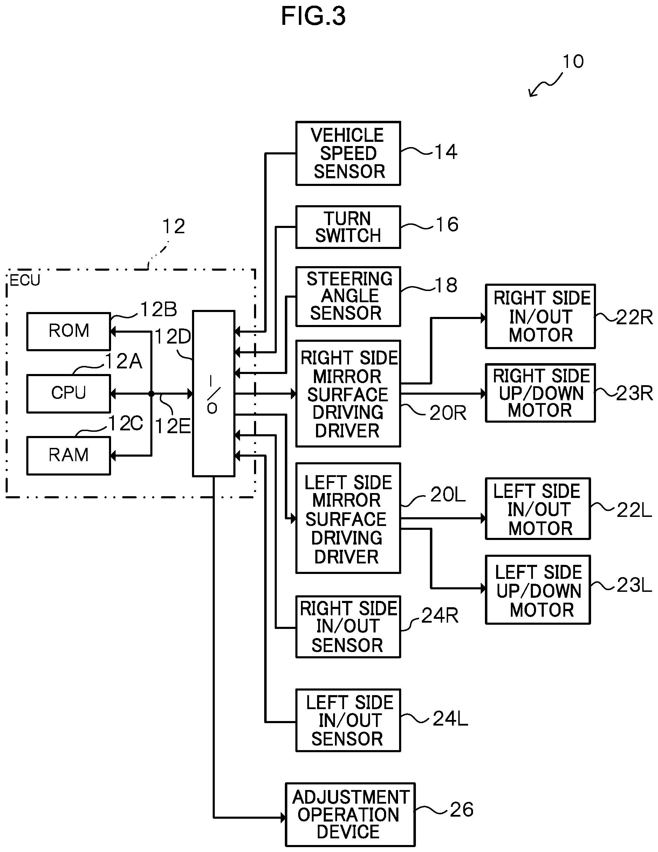

Fig. 3 is a block drawing showing the structure of the control system of the door mirror control device 10 for a vehicle relating to the present embodiment.

As described above, the door mirror control device 10 for a vehicle has the ECU 12. The ECU 12 is structured by a microcomputer in which a CPU 12A, a ROM 12B, a RAM 12C and an I/O (input/output interface) 12D are respectively connected to a bus 12E.

A turning-interlocked mirror control program that is described later, various types of data such as various types of tables, formulas and the like, and the like are stored in the ROM 12B. Due to the program that is stored in the ROM 12B being expanded in the RAM 12C and being executed by the CPU 12A, control that moves the mirror surface 36A of the mirror 34 interlockingly with turning is carried out. Note that, as an example, the turning-interlocked mirror control program is stored as the program that is stored in the ROM 12B, but other programs also are stored.

A vehicle speed sensor 14, a turn switch 16, a steering angle sensor 18 that serves as a detecting portion, a right side mirror surface driving driver 20R, a left side mirror surface driving driver 20L, a right side in/out sensor 24R, a left side in/out sensor 24L, and the above-described adjustment operation device 26 are connected to the I/O 12D.

The vehicle speed sensor 14 detects the traveling speed of the vehicle (hereinafter called the vehicle speed), and the results of detection are inputted to the ECU 12.

The turn switch 16 is a switch for instructing lighting of the turn signals, and instructions for lighting the left and right turn signals are inputted to the ECU 12. Due thereto, on the basis of the signals of the turn switch 16, the ECU 12 judges the intent of the vehicle occupant to turn.

The steering angle sensor 18 detects the steering angle (hereinafter called steering angle) of the steering, and inputs the results of detection of the steering angle to the ECU 12.

A right side up/down motor 23R and a right side in/out motor 22R are connected to the right side mirror surface driving driver 20R. The right side up/down motor 23R and the right side in/out motor 22R are driven in accordance with instructions of the ECU 12. Further, a left side up/down motor 23L and a left side in/out motor 22L are connected to the left side mirror surface driving driver 20L. The left side up/down motor 23L and the left side in/out motor 22L are driven in accordance with instructions of the ECU 12.

The right side in/out sensor 24R detects the tilted position of the right side mirror 34 in the in/out direction, and the left side in/out sensor 24L detects the tilted position of the left side mirror 34 in the in/out direction, and they respectively input the results of detection to the ECU 12. Note that, although not illustrated, up/down sensors as well are provided in correspondence with the respective left and right mirrors 34, and are connected to the ECU 12.

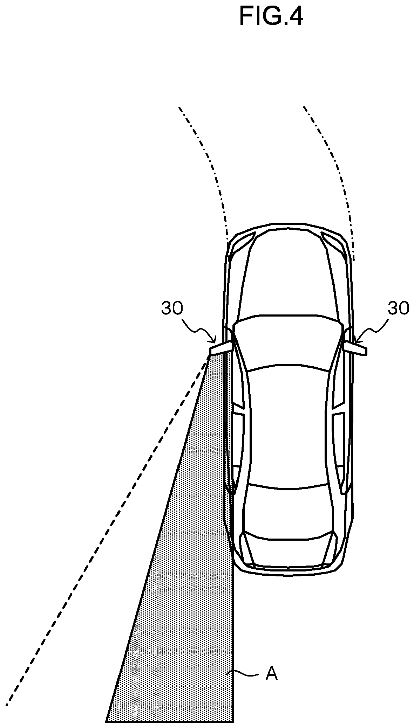

Here, the turning-interlocked mirror control that is carried out at the door mirror control device 10 for a vehicle relating to the present embodiment is described. Fig. 4 is a drawing for explaining the turning-interlocked mirror control.

The turning-interlocked mirror control is carried out due to the ECU 12 executing the turning-interlocked mirror control program that is stored in the ROM 12B.

In a case of carrying out turning such as a right turn or a left turn or the like, the vehicle occupant confirms the door mirror device 30 for a vehicle, and confirms turn collision objects such as bicycles and the like. However, when the turn is started, in accordance with the turning, the viewing range of the periphery of the vehicle, with respect to the vehicle occupant, of the door mirror device 30 for a vehicle moves outside of the region where objects of confirmation as turn collision objects, such as bicycles or the like, exist.

Because objects of confirmation come out of the viewing range at the time of turning of the vehicle in this way, in the turning-interlocked mirror control, control is carried out to tilt the mirror surface 36A of the mirror 34 and change the viewing range, interlockingly with the turning of the vehicle.

Concretely, in a usual state such as a state of traveling straight forward or the like, the vehicle occupant is at a position of viewing region A of the viewing range that is shown in Fig. 4 and is set in advance. Here, at the time of a turn, the amount of turning is detected from the results of detection of the vehicle speed sensor 14 and the steering angle senor 18. Then, the ECU 12 controls the driving of the in/out motor 22 so as to tilt the mirror surface 36A and move region A of the viewing range in the direction of the dashed line in Fig. 4, in accordance with the detected amount of turning. Due thereto, confirmation of turn collision objects at the time of turning can be carried out reliably. Note that, in the present embodiment, the condition for starting the turning-interlocked mirror control, which serves as the change condition under which the viewing range is changed, is, as an example, starting in a case in which the turn switch 16 is on and the steering angle is greater than or equal to a preset threshold value (e.g., 4° or the like). Further, tilting of the mirror surface 36A that corresponds to the amount of turning is controlled by storing, in the ECU 12 and in advance, amounts of movement of the mirror surface 36A that correspond to amounts of turning, and reading-out an amount of movement that corresponds to the amount of turning.

Note that, in the present embodiment, description is given, as an example, of a case in which the turn switch 16 being on and a steering angle that is greater than or equal to a predetermined steering angle being detected are the condition for starting the turning-interlocked mirror control. However, the change condition is not limited to this. For example, the results of detection of another sensor, such as an acceleration sensor or the like, or the like may be used as the change condition.

By the way, as described above, confirmation of turn collision objects can be carried out reliably at the time of turning, by carrying out the turning-interlocked mirror control. However, time is required from the time when the ECU 12 gives an operation instruction to the in/out motor 22 to the time that the mirror surface 36A actually starts to move. For example, time for driving a circuit that has poor responsiveness (e.g., a P-MOS or a charge pump or the like) is needed, or wasted time is required until the mirror surface 36A starts to move due to backlash (play) or the like of mechanical mechanisms up until the mirror surface 36A is operated from the in/out motor 22.

Thus, in the present embodiment, in a case in which it is judged that the vehicle occupant has the intent to carry out a turn, an initial electric power, which is set in advance and which is lower than the driving electric power that is greater than or equal to a preset electric power that changes the viewing range, is applied to the in/out motor 22. Concretely, in a case of establishment of a predetermined condition (e.g., one or some conditions among plural conditions for starting the turning-interlocked mirror control) that is before establishment of the preset change condition under which the viewing range is changed, an initial electric power, which is lower than the driving electric power at which the mirror surface 36A tilts and which is of an extent such that the mirror surface 36A does not move, is applied to the in/out motor 22. Namely, by applying the initial electric power, the circuits that have poor responsiveness are driven in advance, and the mechanical mechanisms are driven by an amount corresponding to the amount of backlash. Due thereto, when a condition for starting the turning-interlocked mirror control is established and a start instruction is given, the mirror surface 36A can be operated immediately, and the responsiveness can be improved.

Note that the above-described initial electric power may be made to be an initial electric power that is lower than the driving electric power by, for example, in a case in which the application of current by PWM control serves as the application of electric power to the in/out motor 22, setting the initial electric power to a value that is lower than the duty value of the driving current at which the mirror surface 36A tilts. Further, although it is preferable that the initial electric power be electric power of an extent that the mirror surface 36A does not move, it may be electric power at which slight movement occurs.

In the present embodiment, control is carried out such that the initial electric power is applied to the in/out motor 22 in a case in which turning-on of the turn switch 16 serves as the predetermined condition. Subsequently, in a case in which a steering angle that is a predetermined steering angle or greater is detected in the state in which the turn switch 16 is turned on, the turning-interlocked mirror control is started. Because the turning-interlocked mirror control is carried out after the initial electric power is applied in this way, movement of the mirror surface 36 can be started immediately without delay together with the start of the turning-interlocked mirror control.

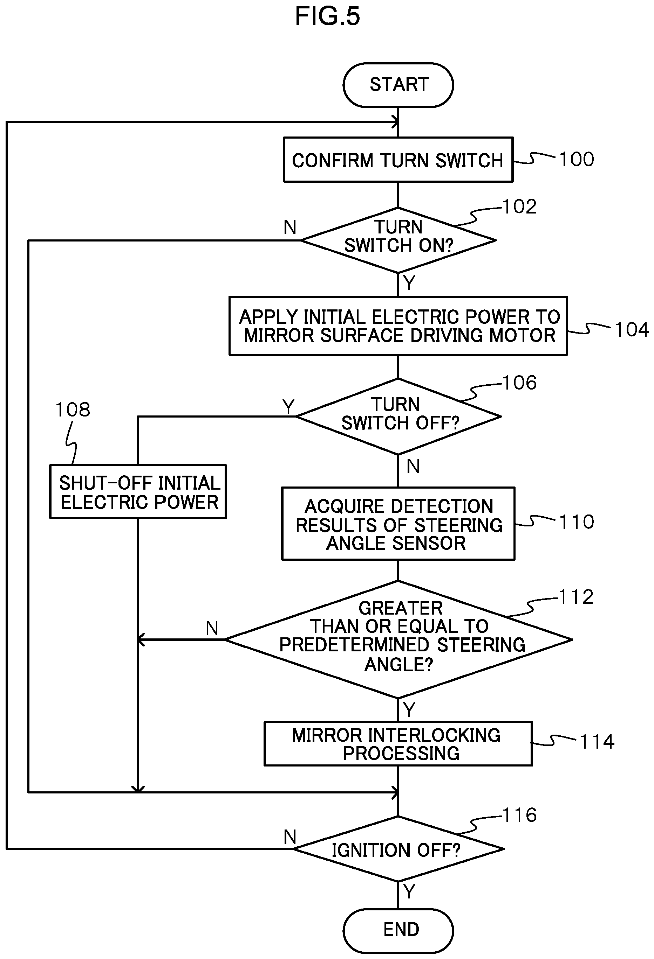

Next, concrete processings that are carried out by the ECU 12 of the door mirror control device 10 for a vehicle, which relates to the present embodiment and is structured as described above, are described. Fig. 5 is a flowchart showing an example of the flow of processings that are carried out by the ECU 12 of the door mirror control device 10 for a vehicle relating to the present embodiment. Note that explanation is given of an example in which the processings of Fig. 5 are started in a case in which an unillustrated ignition switch is turned on.

First, in step 100, the ECU 12 confirms the operating state of the turn switch 16, and the routine moves on to step 102.

In step 102, the ECU 12 judges whether or not the turn switch 16 has been turned on. If this judgment is affirmative, the routine moves on to step 104, and if this judgment is negative, the routine moves on to step 116.

In step 104, due to the ECU 12 controlling the mirror surface driving driver 20, the initial electric power is applied to the in/out motor 22, and the routine moves on to step 106. Due to the initial electric power being applied to the in/out motor 22, circuits that have poor responsiveness are driven. Further, because, generally, static frictional force > dynamic frictional force, the mechanical mechanisms are operated, by the initial electric power, by an amount corresponding to the amount of backlash. Due thereto, when, subsequently, a condition for starting the turning-interlocked mirror control is established and a start instruction is given, the mirror surface 36A can be operated immediately, and the responsiveness can be improved. Note that, in step 104, the initial electric power is applied to the in/out motor 22 that corresponds to the direction (left or right) in which the turn switch 16 is turned on.

In step 106, the ECU 12 judges whether or not the turn switch 16 has been turned off. If this judgment is affirmative, the routine moves on to step 108, and is this judgment is negative, the routine moves on to step 110.

In step 108, the ECU 12 controls the mirror surface driving driver 20, and shuts-off the initial electric power, and the routine moves on to step 116.

In step 110, the ECU 12 acquires the results of detection of the steering angle sensor 18, and the routine moves on to step 112.

In step 112, the ECU 12 judges whether or not the steering angle detected by the steering angle sensor 18 is greater than or equal to a predetermined steering angle. If this judgment is affirmative, the routine moves on to step 114, and, if this judgment is negative, the routine moves on to step 116.

In step 114, the ECU 12 carries out mirror interlocking processing, and the routine moves on to step 116. In the mirror interlocking processing, for example, the amount of turning is determined from the respective results of detection of the steering angle sensor 18 and the acceleration sensor 14, and driving of the in/out motor 22 is controlled so as to move the mirror surface 36A to a preset position in accordance with the amount of turning. In detail, in this control, control is carried out such that, the greater the amount of turning, the more the mirror surface 36A is directed toward the outer side, and the better the region at the outer side can be viewed. Note that movement of the mirror surface 36A that is interlocked with the turning may be controlled such that, when the steering angle starts to become smaller, the control ends and the mirror surface 36A is moved to its original position. Or, movement of the mirror surface 36A that is interlocked with the turning may be controlled such that, in a case in which the steering angle becomes a steering angle that it such that it is judged that there is a state of traveling straight forward, the control ends and the mirror surface 36A is moved to its original position. Or, movement of the mirror surface 36A that is interlocked with the turning may be controlled such that, in a case in which another condition is established, the control ends, and the mirror surface 36A is moved to its original position.

Further, in step 116, the ECU 12 judges whether or not the ignition switch has been turned off. If this judgment is negative, the routine returns to step 100 and the above-described processings are carried out. If this judgment is affirmative, the series of processings is ended.

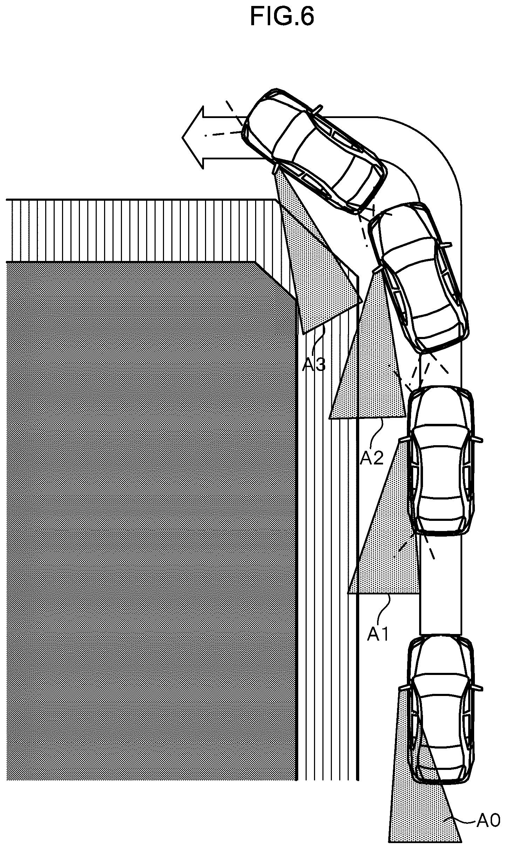

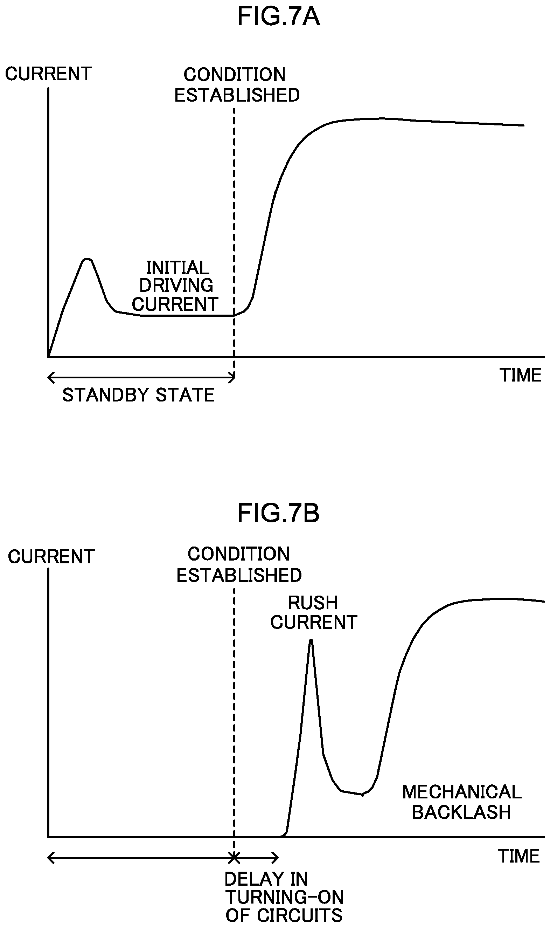

Next, the above-described processings are described by using the case of a left turn as an example. Fig. 6 is a drawing for explaining an operational example, at the time of a left turn, of the door mirror control device 10 for a vehicle relating to the present embodiment. Further, Fig. 7A is a drawing showing current fluctuations of the in/out motor 22 at the door mirror control device 10 for a vehicle relating to the present embodiment, and Fig. 7B is a drawing showing current fluctuations of the in/out motor 22 in a case in which initial electric power is not applied.

In the case of a state of traveling straight forward, as shown in Fig. 6, the door mirror device 30 for a vehicle is at a position at which preset region A0 can be viewed by the vehicle occupant. Here, when the vehicle occupant turns the turn switch 16 on in order to make a left turn, the turn signal is lit (the dashed lines in Fig. 6) and one of the conditions for starting turning-interlocked mirror control is established, and the initial electric power is applied to the in/out motor 22. When the current is applied, due to the initial driving load of the in/out motor 22, the current rises and becomes initial current that serves as the initial electric power, as shown in Fig. 7A. Due thereto, due to the initial current, which is of an extent that the mirror surface 36A does not move, being applied, circuits whose responsiveness is poor are driven in advance, and mechanical mechanisms, such as the gear mechanisms 50 and the like, are driven by an amount corresponding to the amount of backlash. In this state, as shown in Fig. 6, the mirror surface 36A does not move, and the region A0 that can be viewed does not change.

Subsequently, when the steering is operated by the vehicle occupant in order to execute the turn, and the steering angle becomes greater than or equal to a predetermined steering angle (condition established in Fig. 7), the turning-interlocked mirror control is started, and control is carried out such that the mirror surface 36A moves toward the vehicle outer side, and, as shown in Fig. 6, the region A0 that can be viewed moves to region A1 at the vehicle outer side. At this time, as shown in Fig. 7A, the initial current is being applied, and therefore, current is applied immediately, and moving of the mirror surface 36A is started immediately and without delay.

Further, because the mirror surface 36A moves in accordance with the amount of turning, as shown in Fig. 6, the region, in which there is the possibility of existence of a bicycle or the like that is an object of confirmation as a turn collision object, becomes able to be viewed such as region A2 that can be viewed, and oversight of an object of confirmation as a turn collision object is eliminated.

In contrast, a case in which initial electric power is not applied at the time when one or some of the conditions of the turning-interlocking control is established, is shown in Fig. 7B. Namely, current of the in/out motor 22 is not applied up to the establishment of a condition. Even if a condition is established and current is applied to the in/out motor 22, due to the effects of circuits having poor responsiveness (a P-MOS or a charge pump or the like), first, rush current flows, and then the mechanical mechanisms move by an amount corresponding to the amount of backlash. Then, finally, the current at which the mirror surface 36A moves rises, and the mirror surface 36A moves. Accordingly, it can be understood that the responsiveness of the mirror surface 36A is poor as compared with the present embodiment. Accordingly, by applying initial electric power in a case in which one or some of the conditions of the turning-interlocked mirror control is established, the responsiveness in a case of changing the viewing range can be improved.

Note that the above-described embodiment describes the door mirror control device 10 for a vehicle as an example of the viewing control device for a vehicle, but the present invention is not limited to this. For example, the present invention may be applied to a structure that controls a rearview mirror or the like instead of the door mirror device 30 for a vehicle. Or, instead of the door mirror device 30 for a vehicle, the present invention may be applied to an imaging device such as a camera or the like, and may be applied to driving the imaging direction of the imaging device interlockingly with turning.

Further, the above-described embodiment describes, as an example, the viewing control device for a vehicle that controls changing of the viewing range, with respect to the vehicle occupant, at the rear side of the vehicle, but the viewing range is not limited to the rear and the side, and control may be carried out so as to change the viewing range of the front and the side. For example, the present invention may be applied to a viewing control device for a vehicle in which a portion that is a dead angle at the vehicle front or at the front and side is imaged by an imaging device, and changing of the imaging range is controlled, or the like.

Further, in the above-described embodiment, the initial electric power is applied to the in/out motor 22 in a case in which turning-on of the turn switch 16 serves as the predetermined condition. However, the predetermined condition is not limited to this. For example, the initial electric power may be applied to the in/out motor 22 in a case in which greater than or equal to a predetermined steering angle or greater is detected. Or, control may be interlocked with navigation by a navigation device, and, when the vehicle arrives in a vicinity of a guided-to left or right turn position, the initial electric power may be applied to the in/out motor 22. Or, a lane change may be detected on the basis of information of various types of sensors or a navigation device or the like, and the initial electric power may be applied to the in/out motor 22 in a case in which a lane change is detected.

Further, the present invention is not limited to the above, and, other than the above, can, of course, be implemented by being modified in various ways within a scope that does not depart from the gist thereof.

The disclosure of Japanese Patent Application No. 2014-237592 that was filed on November 25, 2014 is, in its entirety, incorporated by reference into the present specification.

## Claims

1. A viewing control device for a vehicle, comprising:
a changing portion that changes a viewing range of a periphery of a vehicle with respect to a vehicle occupant due to driving electric power, which is greater than or equal to a preset electric power, being applied to the changing portion; and
an applying portion that applies a preset initial electric power that is lower than the driving electric power to the changing portion in a case of establishment of a predetermined condition that is before establishment of a preset change condition under which the viewing range is to be changed.

2. The viewing control device for a vehicle of Claim 1, wherein the initial electric power is electric power for operation by an amount corresponding to an amount of mechanical play of the changing portion without starting changing of the viewing range by the changing portion.

3. The viewing control device for a vehicle of Claim 1 or Claim 2, wherein, in a case in which the change condition is established after application of the initial electric power, the applying portion further applies electric power to the changing portion so as to change the viewing range interlockingly with turning of a vehicle.

4. The viewing control device for a vehicle of Claim 3, wherein:
in a case in which turning-on of a turn switch serves as the predetermined condition, the applying portion applies the initial electric power to the changing portion; and
in a case in which, in a state in which the turn switch has been turned on as the change condition, a steering angle that is greater than or equal to a predetermined steering angle is detected by a detecting portion that detects a steering angle, the applying portion applies electric power to the changing portion so as to change the viewing range interlockingly with the turning.

5. The viewing control device for a vehicle of any one of Claims 1-4, wherein the changing portion changes a mirror surface position of a door mirror device for a vehicle, or changes an imaging direction of an imaging device that images the periphery of the vehicle.
